# FASCICULE DE BREVET EUROPEEN

(11) **EP 0 838 362 B1**
(45) Date de publication et mention de la délivrance du brevet: **25.07.2001**
(21) Numéro de dépôt: 97402507.4
(22) Date de dépôt: 23.10.1997
(51) Int. Cl.: B60K 26/02, G05G 1/14

(54) **Agencement d'une pédale d'accélérateur électronique pour véhicule automobile**
Anordnung eines elektronischen Gaspedals für Kraftfahrzeuge
Arrangement of an electronic accelerator pedal for motor vehicle

(30) Priorité: 24.10.1996 FR 9612964
(43) Date de publication de la demande: 29.04.1998
(73) Titulaire: AUTOMOBILES PEUGEOT, 75116 Paris (FR); AUTOMOBILES CITROEN, 92200 Neuilly-sur-Seine (FR)
(72) Inventeur: Darmon, François, 75017 Paris (FR); Rupp, Emmanuel, 92340 Bourg La Reine (FR)
(74) Mandataire: Gendraud, Pierre

(56) Documents cités:
- DE-A- 4 337 679
- FR-A- 2 730 195
- US-A- 3 282 125
- US-A- 4 263 999

## Description

L'invention concerne l'agencement d'une pédale d'accélérateur électronique pour véhicule automobile.

Elle se rapporte plus particulièrement à une pédale qui pivote sur un support fixé au plancher -ou au tablier- du véhicule autour d'un axe transversal à celui-ci, et dont un bras de commande coopère avec un doigt d'entraînement d'un capteur de position -à potentiomètre ou sans contact- relié à un calculateur électronique pour le fonctionnement du moteur du véhicule de manière que la charge -ou puissance- de ce moteur commandée par le conducteur du véhicule varie d'une valeur minimale à une valeur maximale quand le doigt d'entraînement est déplacé par le bras de commande d'une position de repos à une position de butée correspondant respectivement à des positions haute et basse de la pédale.

Un tel agencement est connu du document FR-A-2 730 195.

La position basse de la pédale étant obtenue par une poussée du pied du conducteur, il est souhaitable que cette position ne soit pas obtenue par mise en appui d'éléments de butée du doigt d'entraînement ou du capteur, au risque de détériorer ces éléments et de faire fléchir une partie de la pédale généralement constituée d'une tige, d'où résulterait une mauvaise appréciation par le conducteur de la pleine charge demandée au moteur.

La position basse de la pédale étant ainsi de préférence déterminée par sa mise en appui sur le plancher, un réglage est nécessaire pour obtenir la simultanéité de cet appui et de la mise en position de butée (pleine charge) du doigt d'entraînement.

Il est connu de regrouper sur un même support l'articulation de la pédale et un boîtier portant le capteur et des pièces associées telles que le doigt d'entraînement, ce qui permet un pré-réglage aisé en atelier, avant montage sur véhicule, des positions relatives de la pédale et du doigt. Mais ce pré-réglage, habituellement effectué pour la position de repos (charge minimale) du capteur, ne peut procurer la simultanéité en question sur tous les véhicules à équiper du dispositif à cause des dispersions de fabrication de la pédale, du plancher et du support, ainsi que du positionnement de celui-ci sur le plancher.

L'invention vise à agencer une pédale d'accélérateur et un capteur électrique associé de sorte que la position basse de la pédale obtenue par mise en appui sur le plancher corresponde exactement à la position de butée du doigt d'entraînement du capteur, grâce à un réglage simple lors du montage sur véhicule.

A cet effet l'agencement selon l'invention est du type susmentionné, à pédale articulée sur un support qui est fixé au plancher (ou au tablier) du véhicule et qui est solidaire d'un boîtier portant le capteur. Il est caractérisé en ce que le boîtier est monté pivotant sur le support autour d'un axe transversal au véhicule et est maintenu sur le support, grâce à des moyens de réglage de position angulaire et d'immobilisation, dans une position telle que la mise en position de butée du doigt d'entraînement soit obtenue lorsque la pédale est en position basse d'appui sur le plancher.

Selon quelques dispositions intéressantes de l'invention :
- les moyens de réglage et d'immobilisation comportent des faces crantées coopérantes respectivement du boîtier et du support, dont l'une au moins est arquée concentriquement à l'axe de pivotement du boîtier ;
- l'axe de pivotement du boîtier est confondu avec celui de la pédale ;
- le support est réalisé en matière plastique et sa face crantée est formée sur une portion mince maintenue appuyée par son élasticité propre sur la face crantée du boîtier.

Un mode de réalisation de l'agencement selon l'invention est décrit ci-après, avec référence aux dessins annexés parmi lesquels :
- la figure 1 est une vue latérale d'une pédale d'accélérateur associée à un capteur et disposée sur un plancher de véhicule, en positions d'utilisation ;
- la figure 2 est une vue en coupe partielle selon la ligne II-II de la figure 1 ;
- la figure 3 est une vue analogue à celle de la figure 1 pour des positions de la pédale lors de son montage sur le plancher ;
- la figure 4 est une vue partielle d'un détail de l'agencement selon une variante de réalisation.

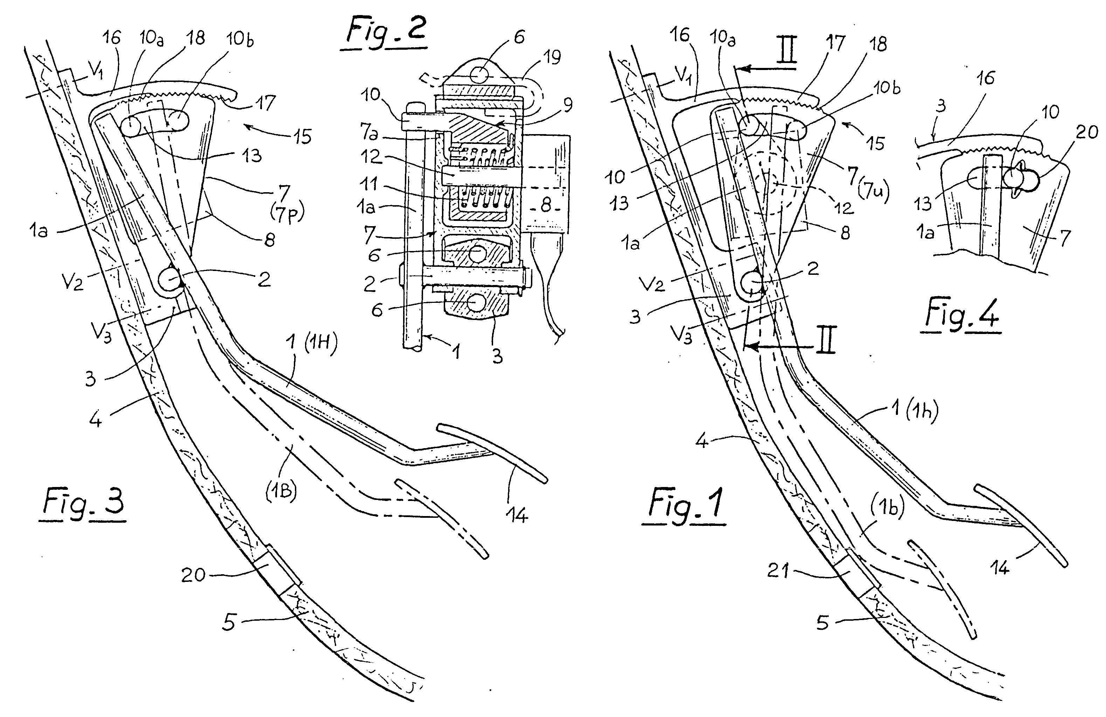

On voit sur les figures une pédale d'accélérateur 1 qui s'articule par un axe 2 sur un support 3 fixé à un tablier 4 prolongeant le plancher 5 d'un véhicule, cette fixation s'effectuant par des vis non représentées traversant le support par des trous 6 au droit de lignes V₁, V₂,V₃ visibles aux figures 1 et 3.

Sur l'axe 2, transversal au véhicule, est monté pivotant un boîtier 7 qui porte un capteur de position 8 -à potentiomètre ou sans contact- et qui contient notamment des éléments connus 9 de liaison du capteur à un doigt 10 d'entraînement et des ressorts de rappel 11, le doigt pivotant autour d'un axe 12 parallèle à l'axe 2 et étant proche d'un plan passant par ces deux axes, de sorte que ses déplacements sont à peu près perpendiculaires à un bras 1a de la pédale qui l'entraîne entre une position de repos 10a et une position de butée 10b où il prend appui respectivement sur l'un ou l'autre de deux bords extrêmes d'une lumière 13 par laquelle il traverse une paroi 7a du boîtier 7.

Le capteur est relié électriquement à un calculateur électronique, de façon usuelle non représentée de manière à adresser à celui-ci des signaux représentatifs de la charge du moteur demandée par le conducteur du véhicule, cette charge variant d'une valeur minimale à une valeur maximale quand le doigt d'entraînement est déplacé de sa position de repos 10a à sa position de butée 10b par le bras la de la pédale pivotant d'une position haute 1h à une position basse 1b de son patin de manoeuvre 14.

La liaison du boîtier 7 avec le support 3 s'effectue par l'axe de pivotement 2 et par des moyens de réglage de position angulaire et d'immobilisation 15 comprenant une languette 16 solidaire du support et munie d'une face crantée 17 appliquée élastiquement sur une face crantée complémentaire 18 du boîtier, au moins l'une de ces deux faces étant arquée concentriquement à l'axe 2. Grâce à l'élasticité en question, les deux faces peuvent être écartées pour permettre le pivotement du boîtier et son réglage sur véhicule.

Le support 3 est de préférence en matière plastique, et la languette 16 réalisée monopièce avec le support présente une élasticité propre assurant l'appui entre les deux faces crantées, éventuellement confirmé après réglage par une agrafe métallique de maintien 19 comme représenté à la figure 2.

Un dispositif de point dur, généralement désigné kick-down et correspondant au passage de la pédale à sa position de pleine charge, peut être intégré de façon usuelle dans le boîtier 7 ou, en variante, constitué d'un ressort à lame 20 formant pince élastique propre à coopérer avec le doigt 10 et logé dans la lumière 13 au droit de son bord d'appui du doigt 10 en position de butée 10b.

La mobilité du boîtier 7 par pivotement sur le support 3 autour de l'axe 2, avant son maintien par les moyens 15, est telle qu'il peut prendre, en plus d'une position réglable d'utilisation (figure 1), une position préalable de montage (figure 3) à laquelle correspond une position excessivement haute 1H de la pédale, permettant une mise en place sur véhicule comme indiqué ci-après.

Le support 3 est fixé au tablier 4 en étant équipé du boîtier 7 placé en position préalable 7p (figure 3) et de la pédale 1 en position excessivement haute 1H. Une légère poussée sur le patin 14 de la pédale amène celle-ci en position basse provisoire 1B visible en traits mixtes à la figure 3, pour laquelle le bras la de la pédale maintient le doigt 10 en position de butée 10b.

Puis une poussée plus forte sur le patin 14 provoque, par appui du bras la sur le doigt 10 en position 10b, et de celui-ci sur le bord extrême correspondant de la lumière 13, un écartement des faces crantées 17 et 18, avec légère flexion élastique de la languette 16, jusqu'à ce que la pédale 1 atteigne une position basse 1b où elle est en appui sur une butée de plancher 21, comme visible en traits mixtes à la figure 1.

Le boîtier 7 est alors en position d'utilisation 7u et s'y maintient, au relâchement de la pédale, grâce à la coopération des faces crantées appliquées élastiquement l'une contre l'autre, et un rappel élastique du doigt à sa position de repos 10a, grâce aux ressorts 11, ramène la pédale, par appui du doigt sur le bras la, en position haute 1h.

Ces deux positions, haute 1h et basse 1b, sont dès lors celles d'utilisation, correspondant bien respectivement aux positions de repos 10a et de butée 10b du doigt d'entraînement du capteur, donc aux charges minimale et maximale du moteur, grâce à l'immobilisation du boîtier 7 dans la position optimale obtenue au montage, indépendante d'éventuelles dispersions dimensionnelles dans la fabrication de la pédale, du plancher ou du support.

Les moyens 15 de réglage et d'immobilisation décrits ci-dessus, qui pourraient être remplacés par des moyens analogues utilisant par exemple des pièces filetées ou un système de friction, sont particulièrement intéressants puisqu'ils permettent le réglage optimal précité avec une facilité extrême, par simple poussée sur la pédale. Le mode de montage et de fonctionnement serait identique si le boîtier 7 pivotait sur le support non pas autour de l'axe 2 de la pédale mais autour d'un autre axe parallèle à ce dernier.

## Revendications

1. Agencement d'une pédale (1) d'accélérateur électronique de véhicule automobile, dans lequel la pédale pivote sur un support fixé (3) au plancher (5) -ou au tablier (4)- du véhicule autour d'un axe (2) transversal à celui-ci et comporte un bras de commande (la) qui coopère avec un doigt (10) d'entraînement d'un capteur de position (8) relié à un calculateur électronique pour le fonctionnement du moteur du véhicule de manière que la charge -ou puissance- de ce moteur commandée par le conducteur du véhicule varie d'une valeur minimale à une valeur maximale quand le doigt d'entraînement (10) est déplacé par le bras de commande (la) d'une position de repos (10a) à une position de butée (10b) correspondant respectivement à des positions haute (1h) et basse (1b) de la pédale,
caractérisé en ce que le capteur (8) et le doigt d'entraînement (10) sont portés par un boîtier (7) qui est monté pivotant sur le support (3) autour d'un axe (2) transversal au véhicule et est maintenu sur le support (3), grâce à des moyens (15) de réglage de position angulaire et d'immobilisation, dans une position (7ᵤ) telle que la mise en position de butée (10b) du doigt d'entraînement (10) soit obtenue lorsque la pédale (1) est en position basse (1b) d'appui sur le plancher (5) ;

2. Agencement selon la revendication 1,
caractérisé en ce que les moyens (15) de réglage et d'immobilisation comportent des faces crantées coopérantes (17,18) respectivement du boîtier (7) et du support (3), dont l'une au moins est arquée concentriquement à l'axe (2) de pivotement du boîtier ;

3. Agencement selon l'une des revendications 1 et 2,
caractérisé en ce que l'axe de pivotement (2) du boîtier (7) est confondu avec celui de la pédale (1) ;

4. Agencement selon l'une des revendications 2 et 3,
caractérisé en ce que le support (3) est réalisé en matière plastique et sa face crantée (17) est formée sur une portion mince (16) maintenue appuyée par son élasticité propre sur la face crantée (18) du boîtier (7).

## Claims

1. Arrangement of an electronic accelerator pedal (1) for a motor vehicle, in which the pedal pivots about a support (3) fixed to the floor (5) - or to the bulkhead (4) - of the vehicle about an axis (2) transverse thereto and comprises a control arm (1a) that co-operates with a drive pin (10) for a position sensor (8) connected to an electronic computer for the operation of the engine of the vehicle in such a way that the load - or power - of said engine controlled by the driver of the vehicle varies from a minimum value to a maximum value when the drive pin (10) is displaced by the control arm (1a) from a rest position (10a) to a stop position (10b) corresponding respectively to top (1h) and bottom (1b) positions of the pedal,
characterised in that the sensor (8) and the drive pin (10) are carried by a housing (7) that is mounted so as to pivot on the support (3) about an axis (2) transverse to the vehicle and is held on the support (3) by means (15) for regulating angular position and for immobilisation, in a position (7ᵤ) such that the positioning of the stop (10b) of the drive pin (10) takes place when the pedal (1) is in the bottom position (1b) resting on the floor (5);

2. Arrangement according to Claim 1,
characterised in that the regulation and immobilisation means (15) comprise co-operating notched faces (17, 18) of the housing (7) and the support (3), respectively, at least one of which is arced concentrically to the axis (2) of pivoting of the housing;

3. Arrangement according to one of Claims 1 and 2,
characterised in that the axis of pivoting (2) of the housing (7) is the same as that of the pedal (1);

4. Arrangement according to one of Claims 2 and 3,
characterised in that the support (3) is made of plastic material and its notched face (17) is formed on a thin portion (16) held pressed by its own resilience against the notched face (18) of the housing (7).

## Patentansprüche

1. Gestaltung eines elektronischen Gaspedals (1) eines Kraftfahrzeugs, bei der das Pedal auf einem Träger (3), der am Boden (5) - oder an der Stirnwand (4) - des Fahrzeugs befestigt ist, um eine zu diesem querliegende Achse (2) schwenkt und einen Steuerarm (1a) aufweist, der mit einem Antriebsfinger (10) eines Lagemeßfühlers (8) zusammenwirkt, der mit einem elektronischen Rechner für den Betrieb des Fahrzeugmotors so verbunden ist, daß die Last - oder Leistung - dieses Motors, die vom Fahrer des Fahrzeugs gesteuert wird, zwischen einem Mindestwert und einem Höchstwert variiert, wenn der Antriebsfinger (10) vom Steuerarm (1a) aus einer Ruhestellung (10a) in eine Anschlagstellung (10b) gebracht wird, die je der oberen (1h) bzw. der unteren Stellung (1b) des Pedals entsprechen,
dadurch gekennzeichnet, daß der Meßfühler (8) und der Antriebsfinger (10) von einem Gehäuse (7) getragen werden, das auf den Träger (3) um eine quer zum Fahrzeug liegende Achse (2) schwenkbar montiert ist und auf dem Träger (3) mit Hilfe von Einrichtungen (15) zur Einstellung der Winkelstellung und der Blockierung in einer solchen Stellung (7u) gehalten wird, daß das in Anschlagstellung (1b) bringen des Antriebsfingers (10) erhalten wird, wenn das Pedal (1) sich in der unteren Auflagestellung (1b) auf dem Boden (5) befindet.

2. Gestaltung nach Anspruch 1, dadurch gekennzeichnet, daß die Einstell- und Blockiereinrichtungen (15) zusammenwirkende, gerastete Flächen (17, 18) des Gehäuses (7) bzw. des Trägers (3) aufweisen, von denen mindestens eine konzentrisch zur Schwenkachse (2) des Gehäuses gebogen ist.

3. Gestaltung nach einem der Ansprüche 1 und 2, dadurch gekennzeichnet, daß die Schwenkachse (2) des Gehäuses (7) mit der des Pedals (1) zusammenfällt.

4. Gestaltung nach einem der Ansprüche 2 und 3, dadurch gekennzeichnet, daß der Träger (3) aus Kunststoffmaterial hergestellt und seine gerastete Fläche (17) auf einem dünnen Abschnitt (16) ausgebildet ist, der durch seine Eigenelastizität auf der gerasteten Fläche (18) des Gehäuses (7) in Anlage gehalten wird.
